# EUROPEAN PATENT APPLICATION

(11) **EP 2 681 991 A1**
(43) Date of publication of application: **08.01.2014**
(21) Application number: 13175196.8
(22) Date of filing: 04.07.2013
(51) Int. Cl.: A01G 13/08, A01G 15/00

(54) **Shockwave generator for an anti-hail cannon wih silencer**

(30) Priority: 04.07.2012 BE 201200455
(71) Applicant: Agro Systems b.v.b.a., 9220 Hamme (BE)
(72) Inventor: Van Praet, Marnix, 9220 Hamme (BE)
(74) Representative: Callewaert, Koen

(57) **Abstract**

The invention concerns a shock wave generator for an anti-hail cannon with a combustion chamber (3) for generating shock waves, whereby this combustion chamber (3) leads to an outlet (8) via an outlet opening (6) in order to guide shock waves to upper air layers so as to create a disturbance zone which prevents the formation of hail in these air layers. A silencer (2) is mounted between the outlet opening (6) and the outlet (8) containing at least two compartments (9,10) which are mutually connected via a central opening (11), whereby a first compartment (9) with an inlet opening (12) connects to said outlet opening (6) of the combustion chamber (3), while a second compartment (10) connects to said outlet (8) via an output opening (13).

## Description

The invention concerns a shock wave generator for a hail cannon with a combustion chamber for generating shock waves. This combustion chamber leads to an outlet via an outlet opening in order to guide shock waves to upper air layers so as to create a disturbance zone which prevents the formation of hail in these air layers. Further, this shock wave generator is provided with a supply pipe for gaseous fuel and an ignition element which lead to said combustion chamber.

When using such shock wave generators or hail cannons, an explosion is generated in said combustion chamber. This creates significant noise nuisance in the region where the shock wave generator is placed.

In order to avoid such noise nuisance, according to the present state of the art, an acoustic insulating shell can be provided around the shock wave generator. This is described for example in document EP 2465339 (or WO 2011/018535).

This solution is not satisfying, however, and it is very bulky. The diameter of an acoustic insulating shell is considerably larger than that of the hail cannon, whereas the height of such a shell is larger than that of the hail cannon. Thus, the solution offered by the prior art is not suitable for use on mobile installations, for example.

The invention aims to remedy these disadvantages by introducing a shock wave generator provided with a silencer whose dimensions are relatively small compared to those of the shock wave generator, while nevertheless achieving a considerable reduction of the possible noise nuisance. Moreover, such a silencer can be easily applied on mobile hail cannons.

To this aim, a silencer is mounted between said outlet opening and said outlet comprising at least two compartments which are mutually connected via a central opening, whereby a first compartment with an inlet opening connects to said outlet opening of the combustion chamber, whereas a second compartment connects to said outlet via an output opening.

Advantageously, this shock wave generator has a central axis extending through said outlet opening, said inlet opening, said central opening and said output opening.

According to a preferred embodiment of the shock wave generator according to the invention, said silencer has a bottom wall in which said inlet opening is provided and which bottom wall defines said first compartment. Further, the shock wave generator has a top wall provided with said outlet opening and which defines said second compartment. A side wall hereby connects to this bottom and top wall so as to form a closed volume, whereby said compartments are separated by a partition in which said central opening is provided.

According to an interesting embodiment of the shock wave generator according to the invention, said partition connects to said side wall and extends substantially parallel to said bottom and top wall between the latter.

Said side wall is preferably formed of a cylindrical casing.

According to a further embodiment of the shock wave generator according to the invention, said central opening is defined by a cylindrical tube whose axis coincides with said central axis.

According to a special embodiment of the shock wave generator according to the invention, there is a free space between said cylindrical tube and said bottom and top wall.

Said cylindrical tube preferably extends on either side of said partition over a height amounting to 1/3rd to 2/3rds of the distance between said partition and said bottom and top wall respectively according to the direction of said central axis.

The invention also concerns a silencer for a shock wave generator for a hail cannon with a combustion chamber leading via an outlet opening to an outlet. This silencer contains at least two compartments which are mutually connected via a central opening, whereby a first compartment has an inlet opening which must connect to said outlet opening, while a second compartment has an outlet opening which must connect to said outlet.

Other particularities and advantages of the invention will become clear from the following description of some specific embodiments of the shock wave generator and the silencer according to the invention. This description is given as an example only and does not limit the scope of the claimed protection in any way; the reference figures used hereafter refer to the accompanying drawings.
Figure 1 is a schematic side view of a shock wave generator provided with a silencer according to the invention.
Figure 2 is a schematic longitudinal cross section through a central axis of the shock wave generator from figure 1.
Figure 3 is a schematic view in perspective of a part of a silencer according to the invention.
Figure 4 depicts a graph of the frequency spectrum of the immission sound for the shock wave generator at a distance of 200 m for a shock wave generator with and without a silencer respectively.
Figure 5 is a schematic longitudinal section through a central axis of a shock wave generator according to a slightly modified embodiment of the invention.

In the different figures, the same reference numerals refer to identical or analogous elements.

The invention concerns a shock wave generator for generating successive shock waves in air layers situated above this shock wave generator in order to prevent the formation of hail in these air layers. That is why such a shock wave generator is also called an anti-hail cannon.

In order to prevent the formation of hail, preferably successive explosions are generated in a combustion chamber of the shock wave generator which each time generate a shock wave which is guided via an outlet opening to the air layers concerned in order to create a disturbance zone in these air layers. The explosions are generated for example by making a gaseous fuel explode in the combustion chamber. A supply pipe for gaseous fuel and an ignition element lead to said combustion chamber in order to make it possible to generate said explosions.

These explosions and the accompanying shock waves have a relatively high noise level, however, as a result of which the use of such a shock wave generator may cause noise nuisance.

However, it was found that low-frequency sound vibrations are mainly responsible for the functioning of the anti-hail cannon and thus prevent hail being formed in the upper air layers, while high-frequency sounds carry farther and thus are the main cause of noise nuisance. More specifically, it can be said that sound with a frequency which is higher than, for example, 160 Hz contributes in particular to this noise nuisance.

The invention thus concerns a shock wave generator provided with a silencer in order to reduce any possible noise nuisance.

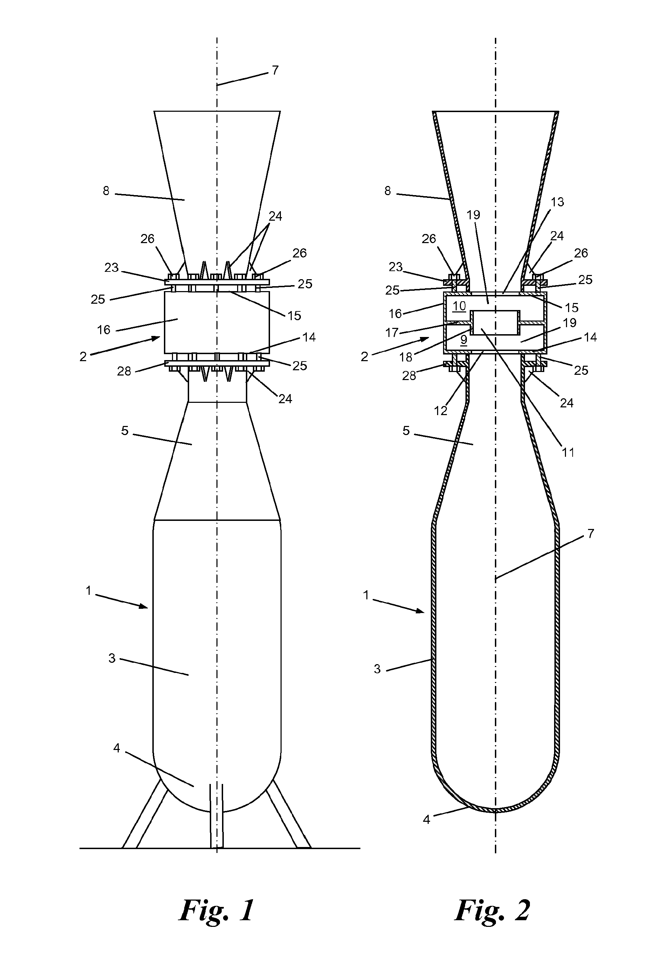

Figures 1 and 2 represent a first embodiment of such a shock wave generator 1 provided with a silencer 2 according to the invention.

This shock wave generator 1 has a cylindrical combustion chamber 3 whose bottom side 4 is spherical, while its upper end 5 is conical and leads to an outlet opening 6. The combustion chamber 3 has a central axis 7.

Further, the shock wave generator 1 is provided with an outlet 8 formed of a conical funnel whose opening with the largest diameter opens freely and is directed towards the upper air layers.

Said silencer 2 is mounted between said outlet opening 6 of the combustion chamber 3 and the outlet 8. This silencer 2 contains two compartments 9 and 10 which are mutually connected via a central opening 11. A first compartment 9 connects with an inlet opening 12 to said outlet opening 6 of the combustion chamber 3, while the second compartment 10 connects via an output opening 13 to said outlet 8.

Said central axis 7 of the combustion chamber 3 hereby preferably extends centrally through the outlet opening 6, the inlet opening 12, the central opening 11 and the output opening 13. Thus, gases formed as a result of an explosion which is generated in the combustion chamber 3 can be led practically unhindered through these successive openings 6, 12, 11 and 13 and the outlet 8 to the surroundings.

The silencer 2 has a bottom or bottom wall 14 in which said inlet opening 12 is provided. This bottom wall 14 thus confines the first compartment 9 on its bottom side. Further, the top side of the silencer 2 has a top wall 15 provided with the corresponding output opening 13 and which thus defines the second compartment 10.

Between the bottom and top wall 14 and 15 extends a side wall 16 which connects to these walls 14 and 15 so as to form a closed volume. This side wall 16 extends in particular over the entire circumference of the silencer 2. Between both compartments 9 and 10 extends a partition 17 which is provided with said central opening 11 and thus separates these compartments 9 and 10 from one another. This partition 17 preferably connects to the side wall 16. The bottom and top wall 14 and 15 and the partition 17 hereby preferably extend practically parallel to one another.

The side wall 16 thus forms a cylindrical casing of the silencer 2, while the bottom and top wall 14 and 15 and the partition 17 are almost primarily formed of an annular disc.

Further, the central opening 11, the inlet opening 12 and the output opening 13 are preferably circular, and advantageously have practically the same diameter.

In the present embodiment, the central opening 11 is delimited by a cylindrical tube 18 whose axis coincides with said central axis 7. This cylindrical tube 18 connects at substantially half the height thereof to said partition 17, such that this tube 18 extends over the same distance on either side of the partition 17.

Between the cylindrical tube 18 and the bottom wall 14 as well as the top wall 15 there is a free space 19. The height of this free space 19 according to the direction of the central axis 7 amounts to for example almost three times half the height of the cylindrical tube 18.

In general, this tube 18 extends for example on either side of the partition 17 over a height according to the direction of said central axis 7, which amounts to 1/6th to 2/5ths of the distance between the partition 17 and the respective bottom or top wall 14 and 15. This height is preferably situated between 1/5th and 1/3rd of the distance between the partition 17 and the respective bottom or top wall 14 and 15.

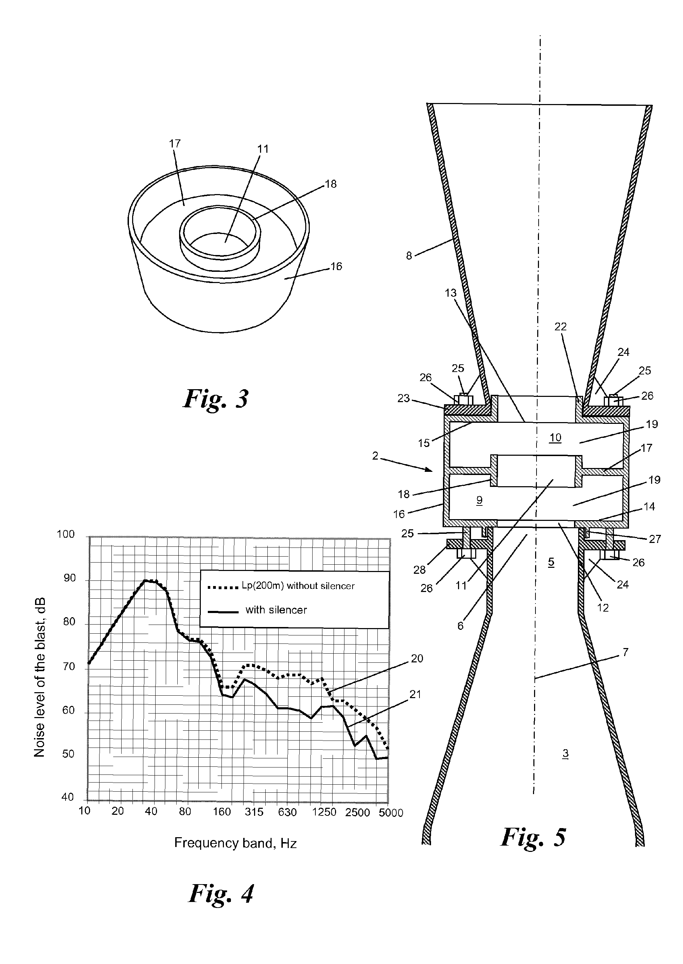

Figure 3 schematically represents a silencer 2 according to the invention, whereby the bottom and top wall 14 and 15 are omitted.

In the above-described embodiment of the shock wave generator, the combustion chamber 3 has a height of some 1.9 m, while its largest diameter is in the order of magnitude of 0.45 m. The conical funnel with the outlet 8 has a height of some 3.55 m. The height of the side wall 16 of the silencer amounts to some 0.2 m.

The principle of the shock wave generator, which thus forms an anti-hail cannon, aims to direct a shock wave vertically upward. The energy at the very low frequencies hereby mainly forms the useful element to prevent the formation of hail. The spread of mid and high frequencies, also generated by the shock wave, can be regarded as a disturbing side effect due to the strong contribution to the A-weighted level of the immission sound.

By adding a silencer to the shock wave generator, the emission of noise is reduced without harming the efficiency of the anti-hail cannon. The silencer according to the invention lets the low-frequency noise of the shock wave pass unhindered, while the middle and high tones are muted. As already described above, this silencer 2 is provided between the combustion chamber 3 and the outlet 8.

Figure 4 represents the frequency spectrum of the immission sound as measured at a distance of 200 m for a shock wave generator in which said silencer 2 is not provided, as a dotted line. The A-weighted sound level of the explosion which takes place in the combustion chamber 3 amounts to 76.7 dB here.

The second curve, represented as a continuous line in figure 4, is a forecast of the immission sound at a distance of 200 m after the silencer 2 according to the invention has been mounted on the shock wave generator. The A-weighted sound level of the explosion is thus reduced to 71.7 dB by the silencer, which is a reduction of 5 dB at the overall level.

Thus, the introduction of this silencer 2 in the anti-hail cannon makes sure that the emission sound of the explosion in the middle and high tones (above 160 Hz) is considerably reduced, such that a reduction of 5 dB in the overall sound pressure level is achieved.

Figure 5 is a more detailed longitudinal cross section of a mounted silencer 2 according to a variant embodiment of the invention.

In this embodiment, a cylindrical tube 22 with an inner diameter of some 194 mm, an outer diameter of some 222 mm and a height of for example 100 mm connects to the top wall 15 of the silencer 2. The conical funnel forming the outlet 8 is slid with its narrow end over this tube 22 in an almost fitting manner. In this example, the inner diameter of the tube 22 is equal to the diameter of said output opening 13.

Further, this narrow end of the outlet 8 is provided with an annular flange 23 extending substantially perpendicular to said central axis 7. Between the outer wall of the outlet 8 and said flange 23 extend reinforcement ribs 24, distributed along the periphery of the outlet 8.

The outlet 8 is thus placed with the flange 23 against said top wall 15, whereby the tube 22 extends centrally in the lower end of the outlet 8. On the top wall 15, fixed to the latter, are provided threaded rods or bolts 25 which extend through bores in the flange 23 provided to that end. The outlet 8 is thus secured with the flange 23 against the top wall 15 of the silencer 2 by nuts 26 which cooperate with said threaded rods or bolts 25.

The bottom side of the silencer 2 is also provided with an annular tube 27 which is coaxial with the inlet opening 12 and provided against the bottom wall 14. This tube 27 has a height of 20 mm, an inner diameter of 235 mm and an outer diameter of 248 mm.

As shown in figure 5, the upper end 5 fits in this tube 27 with the outlet opening 6 of the combustion chamber 3. Near this outlet opening 6, the combustion chamber 3 is provided with an external flange 28 in which bore holes are provided through which a threaded rod or bolt 25 extends each time. A far end of these threaded rods of bolts 25 is secured to the bottom wall 14 of the silencer 2. By means of a nut 26, the combustion chamber 3 is thus secured against the bottom wall 14.

Naturally, the invention is not restricted to the embodiments of the shock wave generator and the silencer described above. It goes without saying that several variant embodiments may be considered within the scope of the invention. Thus, alternative ways can be provided for those skilled in the art to connect and secure the silencer to the outlet 8 and to the combustion chamber 3.

The dimensions mentioned above for the silencer and the shock wave generator are merely given by way of example and may relate to the embodiment of figures 1 and 2 as well as to those of figure 5.

Neither is the number of consecutive compartments 9 and 10 that the silencer contains restricted to two as described above; on the contrary, more than two consecutive compartments can be provided which are each time separated by a partition with a central opening.

Further, the side wall 16 of the silencer must not necessarily be cylindrical, but it can also take for example the shape of an ellipsoid, partially or completely.

In some cases it may be interesting to partially fill said compartments with an acoustic dampening material, such as for example a preferably open-cell synthetic foam, a mineral wool or a material with an open porous structure, whereby a passage is left for the shock waves according to the central axis 7 having a diameter which practically corresponds to that of the inlet opening 12, the central opening 11 or the output opening 13.

Further, it is also possible to coat the inner wall, or at least a part of this wall, with an acoustic dampening material such as for example rubber, a mineral wool or a preferably open-cell synthetic foam.

## Claims

1. Shock wave generator for an anti-hail cannon with a combustion chamber (3) for generating shock waves, whereby this combustion chamber (3) leads to an outlet (8) via an outlet opening (6) in order to guide shock waves to upper air layers so as to create a disturbance zone which prevents the formation of hail in these air layers, whereby a supply pipe for gaseous fuel and an ignition element lead to said combustion chamber (3), **characterised in that** a silencer (2) is mounted between said outlet opening (6) and said outlet (8) containing at least two compartments (9,10) which are mutually connected via a central opening (11), whereby a first compartment (9) with an inlet opening (12) connects to said outlet opening (6) of the combustion chamber (3), while a second compartment (10) connects to said outlet (8) via an output opening (13).

2. Shock wave generator according to claim 1, whereby it has a central axis (7) extending through said outlet opening (6), said inlet opening (12), said central opening (11) and said output opening (13).

3. Shock wave generator according to claim 1 or 2, whereby said silencer (2) contains a bottom wall (14) in which said inlet opening (12) is provided and which bottom wall (14) confines said first compartment (9), and whereby a top wall (15) with said output opening (13) confines said second compartment (10), while a side wall (16) connects to this bottom and top wall (14,15) so as to form a closed volume, whereby said compartments (9,10) are separated from one another by a partition (17) provided with said central opening (11).

4. Shock wave generator according to claim 3, whereby said partition (17) connects to said side wall (16) and extends substantially parallel to said bottom and top wall (14,15) between the latter.

5. Shock wave generator according to claim 3 or 4, whereby said side wall (16) is formed of a cylindrical casing.

6. Shock wave generator according to any one of claims 3 to 5, whereby said bottom and top wall (14,15) and said partition (17) are formed of an annular disc.

7. Shock wave generator according to any one of claims 3 to 5, whereby said central opening (11) is confined by a cylindrical tube (18) whose axis coincides with said central axis (7).

8. Shock wave generator according to claim 7, whereby there is a free space between said cylindrical tube (18) and said bottom and top wall (14,15).

9. Shock wave generator according to claim 7 or 8, whereby said cylindrical tube (18) extends on either side of said partition (17) over a height which amounts to 1/6th to 2/5ths of the distance between said partition (17) and said bottom and top wall (14,15) respectively according to the direction of said central axis (7).

10. Shock wave generator according to any one of claims 3 to 9, whereby at least said side wall (16) of said compartment is coated with an acoustic dampening material.

11. Shock wave generator according to any one of claims 1 to 10, whereby said compartments contain an acoustic dampening material.

12. Method for dampening noise generated by an anti-hail cannon whereby shock waves are generated in a combustion chamber (3) and whereby these shock waves are guided to upper layers via an outlet opening (6) of the combustion chamber (3) which leads to an outlet (8) so as to create a disturbance zone which prevents the formation of hail in these air layers, whereby a gaseous fuel is supplied and ignited in the combustion chamber (3) in order to generate said shock waves, **characterised in that** said shock waves are guided from the combustion chamber through at least two consecutive compartments, mutually connected via a central opening (11), to said outlet opening (6).

13. Method according to claim 12, whereby a first compartment (9) of said compartments connects to said outlet opening (6) and is confined at this outlet opening (6) by a disc-shaped bottom wall (14) in which said inlet opening (12) is centrally provided, whereby a top wall (15) with said output opening (13) confines a second connecting compartment (10), while a side wall (16) connects to this bottom and top wall (14,15) so as to form a closed volume, whereby said compartments (9,10) are separated from one another by a partition (17) provided with said central opening (11), while the diameter of each of said compartments (9,10) according to a direction transverse to a central axis (7) of the anti-hail cannon is larger than the diameter of each of said inlet opening (12), central opening (11) and output opening (13), whereby said shock waves are successively guided through the inlet opening (12), the central opening (11) and the output opening (13).

14. Method according to claim 12 or 13, whereby said shock waves are guided through said central opening (11) by the inner wall of a cylindrical tube (18) which is coaxial to a central axis (7) of the anti-hail cannon.

15. Silencer for a shock wave generator for an anti-hail cannon with a combustion chamber (3) which opens in an outlet (8) via an outlet opening (6), whereby this silencer (2) comprises at least two compartments (9,10) which are mutually connected via a central opening (11), whereby a first compartment (9) has an inlet opening (12) which must connect to said outlet opening (6), while a second compartment (10) has an output opening (13) which must connect to said outlet (8), whereby this silencer comprises a bottom wall (14) in which said inlet opening (12) is provided and which bottom wall (14) confines said first compartment (9), and whereby it further comprises a top wall (15) with said output opening (13) and confining said second compartment (10), while a side wall (6) connects to this bottom and top wall (14,15) so as to form a closed volume, whereby said compartments (9,10) are separated by a partition (17) provided with said central opening (11), **characterised in that** said central opening (11) is confined by a cylindrical tube (18), whereby there is a free space (19) between this cylindrical tube (18) and said bottom and top wall (14,15).
